# EUROPEAN PATENT APPLICATION

(11) **EP 4 753 089 A1**
(43) Date of publication of application: **03.06.2026**
(21) Application number: 24383283.9
(22) Date of filing: 27.11.2024
(51) Int. Cl.: H02G 3/14

(54) **FRAME FOR FASTENING ELECTRICAL MECHANISMS**

(71) Applicant: Schneider Electric España, S.A., 08019 Barcelona (ES)
(72) Inventor: GONZALEZ IRIBAS, Aitor, 08019 Barcelona (ES)
(74) Representative: Plasseraud IP

(57) **Abstract**

A fastening frame (100) for fastening electrical mechanisms to a corresponding box (300) by means of fastening screws (200), characterised in that it comprises, on at least two opposite sides, an elastic fastening element (120) with a V-shaped cross-section, comprising two sheets, one inner (122) and one outer (124), joined by means of an elastic pivoting articulation (126), such that one inner end of the "V" is integral with a central portion of the frame (100), and the other end of the "V" is free and creates a fastening edge (112), such that when the frame (100) is assembled in the box (300), when the frame (100) presses against the head of the fastening screws (200) partially fastened in the box (300), the outer sheet (124) of the elastic fastening element (120) flexes until it overcomes the fastening edge (112), said fastening edge (112) resting on the threaded body of the fastening screw (200) by the action of the elastic pivoting articulation (126), enabling the frame (100) to be fastened by fastening the fastening screws (200) to the fastening edge (112).

## Description

### Technical field

The present invention relates to the technical field of electrical mechanisms or, more particularly, to frames or brackets that serve to fasten the mechanism itself to a corresponding box that is usually assembled on a wall.

### State of the art

As is known, wall-mounted electrical mechanisms, such as, for example, sockets, are assembled on frames or brackets that support the entire mechanism, including the central cover, and which protrude beyond the mechanism and cover, surrounding the latter on the outside, in a plane parallel to the corresponding assembly wall, such that they can be fastened to a box recessed in said wall. Other devices that can be fastened may include switches, data connectors, USB chargers, etc.

A common problem for this type of mechanism is the correct alignment thereof and the outer frame that will eventually surround it. Due to misalignments caused by poor assembly of the recessed box or, for example, manufacturing defects, it is now common for these mechanisms to be fitted with fastening systems that allow a certain amount of clearance and fine adjustment of the assembly, in terms of horizontal and vertical position and levelling, so that the final aesthetic effect is optimal, without inclination of the outer frames or the mechanisms themselves or undesired separations between adjacent mechanisms. Another problem is that, for recessed boxes with a frame fastening screw included (usually throughout Europe), in order not to loosen the screws completely and have to replace them afterwards, they are partially loosened and the frame is rotated to pass through a hole with a diameter larger than the screw head and then rotated again to make it horizontal. In multiple installations this frame assembly via screws that rotate is even more costly because it limits the geometries that can overlap and collide with each other in this assembly process.

Among the background relating to this type of system, mention may be made, for example, of patent EP3503322 in which the fastening frames comprise elongated plates with curved slots and a widening at one of the ends of said slots for the passage of the head of a corresponding fastening screw. On the one hand, this means that the product must always be rotated to pass through the wider area as explained above, and then rotated again so that when the screw is tightened it rests on the narrower area. The plates are connected to the frames but have certain clearance with respect to the same in the radial direction of the hole of the mechanism that enable the frame to move horizontally and vertically and also to rotate due to its curvature. In solutions of this type, one of the drawbacks to be improved would be to be able to dispense with the use of independent pieces added to the frame (as is the case of the plates mentioned) which require a separate manufacturing process, their subsequent assembly in the frame and a certain amount of manual handling and positioning by the assembler at the time of assembly in the corresponding box since, as mentioned above, they have a certain amount of play in relation to the body of the frame which must be eliminated by tightening with screws.

The present invention provides an alternative to the already known assembly systems, focusing on a fastening frame which, in some of the preferred embodiments thereof, can be made in one piece and easy to assemble, even with one hand if desired, as will be described below. Based on the technical features that will be detailed in the following sections, the assembly of the frame simply requires a pushing movement in the direction of the wall and the subsequent fine adjustment of the position (vertical, horizontal and levelling or inclination) and, finally, securing the position by tightening the corresponding screws. The frame also includes a mechanism that facilitates easy disassembly and is integrated into the body of the frame itself.

### Object of the invention

According to the objectives set out in the previous section, the object of the present invention is a fastening frame for electrical mechanisms of the type comprising one or more slots for the passage of fastening screws for fastening to a corresponding housing. In the following description, the terms "outer"/"inner" and their corresponding variants are used in relation to different elements or portions of the described frame and refer to a greater/lesser distance, respectively, in relation to the centre of the fastening frame of the invention.

Thus, the invention relates to a fastening frame for fastening electrical mechanisms to a corresponding box by means of fastening screws, characterised in that it comprises, on at least two opposite sides, an elastic fastening element with a V-shaped cross-section, comprising two sheets, one inner and one outer, joined by means of an elastic pivoting articulation, such that one inner end of the "V" is integral with a central portion of the frame, and the other end of the "V" is free and creates a fastening edge, such that when the frame is assembled in the box, when the frame presses against the head of the fastening screws partially fastened in the box, the outer sheet of the elastic fastening element flexes until it overcomes the fastening edge, said fastening edge resting on the threaded body of the fastening screw by the action of the elastic pivoting articulation, enabling the frame to be fastened by fastening the fastening screws to the fastening edge.

Normally the box comprises screwed fastening screws such that they are not completely screwed, leaving a gap between the heads and the fastening holes for fastening to the box. With the screws in this position due to the elastic fastening element, it is possible to assemble the frame by pressing and, once the head of the screw has been overcome, to adjust the position of the frame both laterally and in rotation due to the flexibility of the elastic fastening element and, once the required position has been reached, to fasten the screw to the fastening edge. Evidently, the elastic fastening element is made of a material and thickness that allows this elastic movement, and once the compressive force is no longer applied, it recovers its initial position. Preferably, the outer sheet has an outward inclination to facilitate compression with contact with the head of the fastening screw.

This configuration facilitates assembly work by easily adjusting the frame to eliminate deviations in angle and distance due to imperfections in the wall to which the mechanism box is fastened. In addition, there is no need for a spring to bring the elastic fastening element into the locking position thereof, providing a robust system with a longer useful life. It also facilitates disassembly work by simply moving the elastic fastening element to the compressed position after loosening the fastening screw. In short, with this system, variations in the distance between screws due to defects in the installation boxes themselves or deformations of said boxes during wall, floor or ceiling assembly are absorbed. In addition, it absorbs other possible errors in box spacing, box alignment and horizontality for multiple boxes.

According to a preferred but optional feature of the elastic fastening element described above, the outer sheet of the elastic fastening element ends in a terminal portion (i.e. a portion at the free end of said sheet) which has a slope, with respect to the plane of the frame, which is less than the slope of the rest of the sheet up to the elastic pivoting connection with the inner sheet. In this way, the passage of the corresponding head of the screw is better controlled, which presses said outer sheet of the wedge against the inner sheet thereof as the frame is pressed proximally against the assembly box and with the half-screwed screws as described above. "Proximal", "proximally" and their variants, as used herein, refer to an element or portion that is closer to the assembly box or wall as compared to another element or portion taken as a reference, or to an element, portion or movement that is directed in a direction approaching said assembly box or wall. "Distal", "distally" and their variants, as used herein, refer to an element or portion that is further away from the assembly box or wall as compared to another element or portion taken as a reference, or to an element, portion or movement that is directed in a direction away from said assembly box or wall.

Preferably, the terminal portion of the elastic fastening element comprises an upper face at an angle with respect to the main plane of the frame. This helps the fastening screw to lock in the end axis of the surface and prevents it from slipping and escaping when the screw is tightened.

According to another feature of the invention, the frame comprises an outer edge preferably following the outer perimeter of the frame, which together with the fastening edge of the elastic fastening element defines a through slot for the passage of the fastening screw, the outer edge being in the shape of an elongate elastically deformable strip. This strip is elastically deformable in such a way that it can be opened, making the slot wider, to allow the passage of the head of the corresponding screws. It may itself be elastically deformable due to the material it consists of and/or due to its own configuration in such a way as to shorten the length of the slot in accordance with the opening movement thereof of the separation of said slot. In addition, said edge allows the head of the screw to be pressed against the fastening edge during assembly of the frame to ensure correct fastening.

In accordance with an additional feature of the invention, the frame is made from a single piece of plastic such that it monolithically comprises the elastic fastening element and the outer edge. This type of piece is easier to mass-produce, reducing manufacturing costs and ensuring the correct operation of the fitting of the frame for fastening.

As an alternative feature to the above, the V- or U-shaped elastic fastening element is independent from the frame body, made of metal and can be firmly fastened to the frame to fulfil the functions described so far and others that may be described later. In connection with this feature, the inner sheet, i.e. the sheet closest to the body of the frame, preferably comprises a plurality of claws for gripping or hooking firmly to the corresponding conformations of the frame, which facilitate fastening by clipping. These formations could be arranged on the inner sheet, with the frame wall comprising said claws, without changing their functionality.

Due to this configuration, the element that withstands the most stress is reinforced, avoiding the need to replace the entire frame in case of wear or breakage.

Another feature of the invention relating to the material that makes up the same, and an alternative to the last two mentioned, relates to the fact that the frame can be a single piece made of metal. In this case, the outer edge defining the slot, i.e. the one furthest from the centre of the frame, comprises a flange or tab directed distally, i.e. away from the assembly wall or box, and this flange comprises a curved convexity towards the centre of the frame, and facing the fastening edge. This facilitates the passage of the head of the screw through the slot when the frame is pressed against the box, also pushing the head of the screw against the fastening edge so that the head is arranged over the same.

In addition, as the material is metal, in order to facilitate the elastic action, the elastic element preferably comprises a through recess or cut-out in the central fastening portion for fastening to the frame (including, for example, the area of the elastic pivoting connection between the two sheets thereof). This recess can be any that is sufficient to facilitate said elastic compression while, at the same time, maintaining the necessary structural strength for the stresses to which the wedge will be subjected in a typical series of work cycles or application. It is intended that this feature can also be used in the plastic alternative.

Lastly, according to another feature of the invention, the frame comprises a mechanism for locking the outer sheet of the elastic fastening element in its elastic opening position of the slot and, thus, being able to remove the frame more easily by disassembling it with respect to the box. For this purpose, the body of the frame comprises at least one locking projection, and preferably two projections that are arranged in such a way that they project into the path of the outer sheet of the wedge when it is elastically compressed to open the slot; each of the projections intercepts the path of a respective side of the outer sheet. The shape of these projections is such as to allow, by means of light manual pressure, the passage of the sheet overcoming them by means of a clipping action, but said sheet is then immobilised such that it cannot undertake its elastic recovery movement, and thus a suitable opening is provided for removing the frame since the head of the corresponding screws can pass through said opening. It is not necessary to maintain said force with an additional tool such as a screwdriver.

### Description of the figures

The drawings attached hereto are listed and briefly described below, by way of nonlimiting example, to illustrate and facilitate the interpretation of the flexible frame for fastening electrical mechanisms disclosed by this invention.
Figure 1 is a top plan view of an embodiment of the frame of the present invention, with an incorporated socket mechanism. An installation box can be seen underneath before the clip fitting on the screws.
Figure 2 is a perspective view of the embodiment of the frame of figure 1 but without the socket mechanism.
Figures 3 to 5 are three cross sections of the embodiment of the frame of figures 1 and 2 to show the operation of the components that facilitate the assembly and disassembly thereof in a corresponding box, respectively at three points in the process.
Figure 6 is a perspective view of another embodiment of the elastic wedge forming part of the frame of the invention.
Figure 7 is a bottom perspective view of another embodiment of the frame of the invention corresponding to the elastic wedge shown in figure 6.
Figure 8 shows another embodiment of the frame of the present invention.
Figure 9 shows another embodiment of the present invention, which incorporates a locking feature of the elastic recovery of the wedge to allow quick and easy disassembly of the frame.
Figure 10 shows a top plan view according to the embodiment of figures 1 to 5, in which the frame can be seen compensating for a horizontal adjustment.
Figure 11 shows a top plan view according to the embodiment of figures 1 to 5, in which the frame can be seen compensating for a rotational adjustment.
Figure 12 shows a top view of a practical embodiment of multiple boxes, in which a relative adjustment between frames can be seen to compensate for defects in verticality.
Figure 13 shows a top plan view of another embodiment of the frame of the present invention.
Figure 14 shows a perspective view of the embodiment of the frame of Figure 13.
Figure 15 shows a top plan view according to the embodiment of Figures 13 to 14, in which the frame can be seen rotated with respect to the installation box for disassembly of the frame.
Figure 16 shows a top plan view of another embodiment of the frame of the present invention.
Figure 17 shows a perspective view of the embodiment of the frame of Figure 16.

### Detailed description of the invention

A detailed description of the invention is provided below with reference to the figures outlined in the previous section.

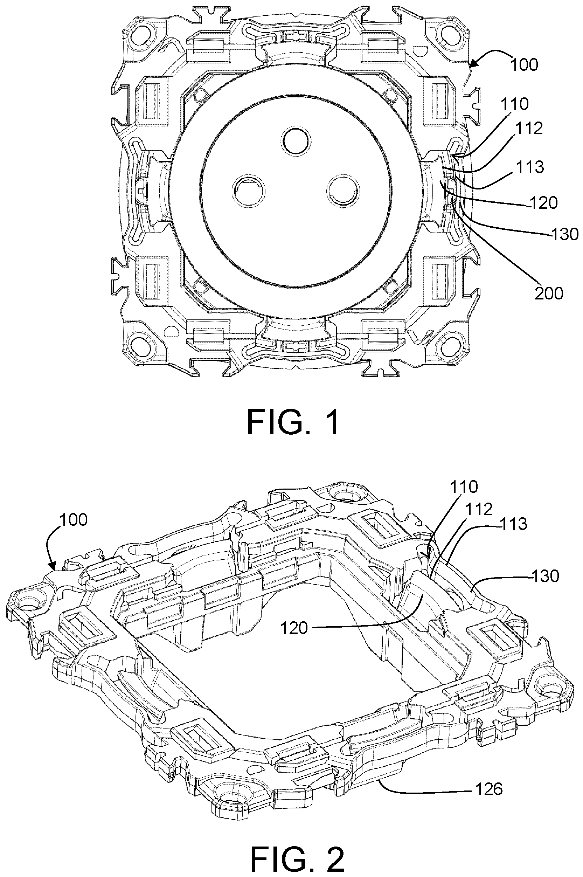

Figure 1 shows a top plan view of a fastening frame (100) for fastening electrical mechanisms according to the present invention. In this case, the upper portion of a socket-shaped mechanism also appears in the central area to illustrate the positioning thereof in relation to the different portions of the frame (100). The frame (100) of the practical embodiment shown in the figures is of the type comprising one or more (usually four) longitudinal slots (110) distributed on the periphery of the body of the frame (100) and aligned so that the latter can be fastened to an assembly box (300) (not visible in figure 1) by means of corresponding fastening screws (200). As can be seen in this figure, the width of the slot (110) is such that it does not allow the passage of the head of a screw (200) that is already partially screwed into a respective threaded hole of the assembly box. This allows the frame (100) to be positioned centrally and resting on the screws (200) prior to installation. It should also be noted that, throughout this description and the attached figures, the portions of the frame (100) corresponding to one of the longitudinal slots (110) are specified or explained in detail, it being understood that this explanation can be extended to the rest of the slots (110). The latter, in order not to unnecessarily complicate the identification of the constituent elements of the invention, may not include reference numbers pointing thereto or to their associated elements (as in the case of Figure 1, where only the longitudinal slot (110) on the right and the elements that interact with it are labelled) but, due to symmetry and visual identity of the different components, it is clearly observed that such explanations serve for the other slots (110) (top, left and bottom).

Figure 2 shows a perspective top view of the same embodiment of the frame (100) shown in figure 1. In both figures, the fastening edge (112) and the outer edge (113) thereof are also identified in a slot (110); the idea of the invention consists of making the opening of said slot (110) elastically widen by pushing the frame (100) proximally (i.e. against the box (300)), and therefore against the head of the screws (200), and so that the latter can then pass to the other side of the frame (100), i.e. to the upper or distal side or face. Once the head of the corresponding screw (200) is located above the frame (100), the positioning of the latter can be adjusted (due to the clearance of the longitudinal slots (110) with respect to the shank of the screw (200) and its curved shape), and lastly, secured by tightening the screws (200) on the fastening edge (112). The dimensions of the slots (110) are such that they allow for vertical, horizontal and rotational (inclination or levelling) adjustment.

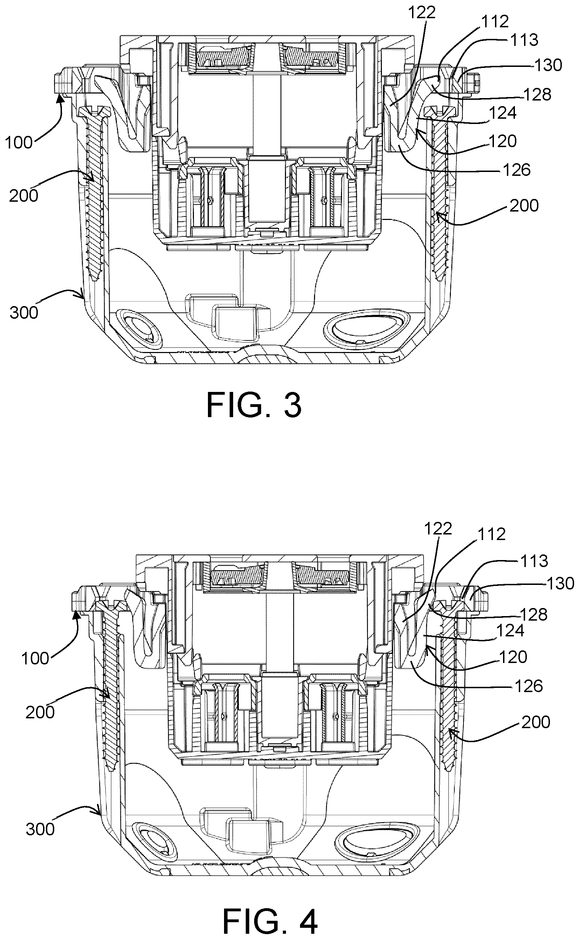

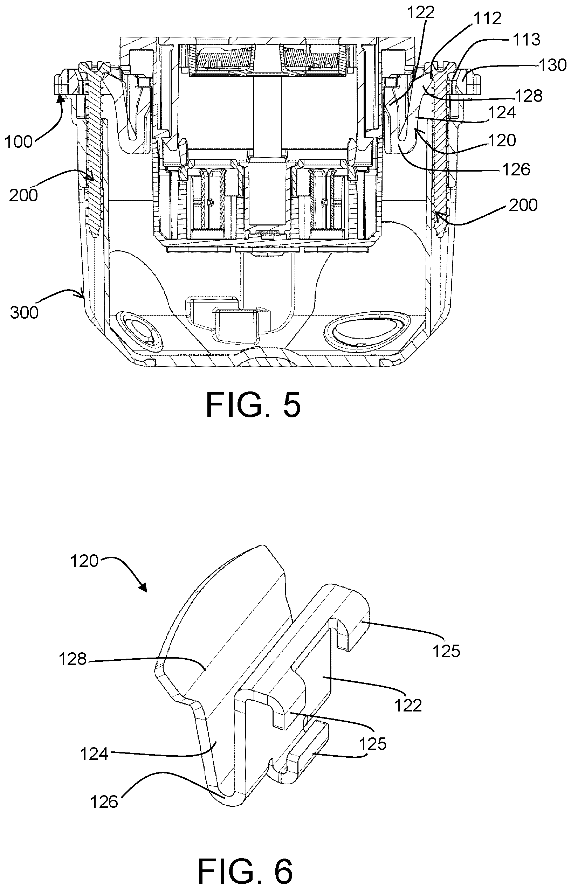

In one preferred embodiment, in order to provide such elasticity to the fastening edge (112), the elastic fastening element (120) is provided which can best be seen in the cross sections of Figures 3 to 5. This elastic fastening element (120) is substantially U- or V-shape and consists of two sheets or faces (122, 124) which are connected to each other by an elastic pivoting articulation (126). The inner sheet (122) is firmly fastened to the body of the frame (100) and the outer sheet (124) is free such that it is suitable to be pushed against the inner sheet (122), thus opening the separation formed by the corresponding longitudinal slot (110). This opening of the slot (110) is caused by the movement of the frame (100) against the box (300), and thus against the head of the screw (200), such that the latter comes into contact with the outer sheet (124) (as can be seen in Figure 4) and, as the frame (100) moves closer and closer to the box (300), it eventually overcomes the fastening edge (112) of the slot (110) and is located on the other side of the frame (100) (Figure 5). Lastly, the outer sheet (124) returns to its initial resting position and partially closes the slot (110) again, to the point that the head of the screw (200) cannot pass through (also figure 5). Once the orientation of the frame (100) has been finely adjusted, with the same in the position shown in Figure 5, the corresponding screws (200) can be tightened against the fastening edge (112) to maintain said orientation.

Furthermore, in order to facilitate a passage of the head of the screw (200) by a clipping action, there is provided, on the outer sheet (124) of the elastic fastening element (120), a terminal portion (128) which has a lesser inclination or slope than the rest of the body of said sheet (124).

The inner sheet (122), the edge of which is securely connected to the frame (100), has, in the illustrated embodiment, a substantially straight, vertical shape and ends at the upper portion thereof with an inclined section that is connected to the body of the frame (100). This inner sheet (122) could have other configurations such as, for example, straight and vertical along its entire length, inclined along its entire length, fastened to the frame (100) only at its upper edge (as shown in figures 3 to 5), fastened to the frame (100) at various portions of its length from its lowest to its highest area, fastened along its entire length to the frame (100), etc.

As for the outer edge (113) of the slot (110), its elastic opening displacement of said slot (110) is achieved by providing the outer edge (113) in the form of an elongate strip (130) (which can best be seen in Figures 1 and 2, for example) joined at its ends respectively to the ends of the slot (110). This outer edge (130) is made with a thickness such as to allow a certain elastic movement of the outer edge towards the outside of the frame (100) and, at the same time, with a structural strength sufficient to withstand the various work cycles (assembly/disassembly) to which the frame (100) may be subjected. In one preferred embodiment, as detailed below, the strip (130), as well as the other functional features described so far, form a single piece with the rest of the frame (100).

When the screws (200) have not yet been tightened to firmly fasten the frame (100) to the box (300), but the head of the screws (200) is already above the frame (100), the dimensions of the slots (110) and the elasticity of both the elastic fastening element (120) and the strip (130) allow the frame (100) to be repositioned until an aligned and level position is reached for the final assembly of the outer frame of the electrical mechanism. That is, the flexibility of the edges (112, 113) of the slot (110), if necessary, also allows its deformation once the head of the screw (200) has passed through to adjust the position of the mechanism, said deformation being permanently fastened by the pressure exerted by the head of the screw (200) against the box (300) once it has been properly tightened.

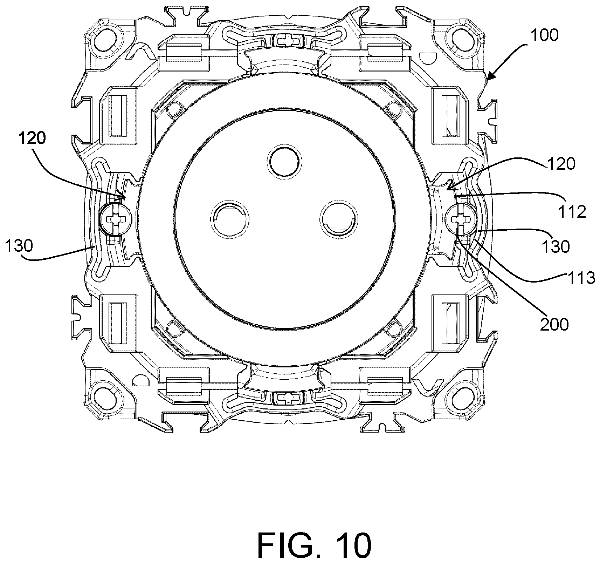

An example of a positioning adjustment can be seen in figure 10, in which a misalignment in the horizontal direction has been compensated, and as can be seen in said figure, the elastic fastening element (120) is more compressed on the left portion than on the right side, thus compensating for the horizontal misalignment of the housing (300).

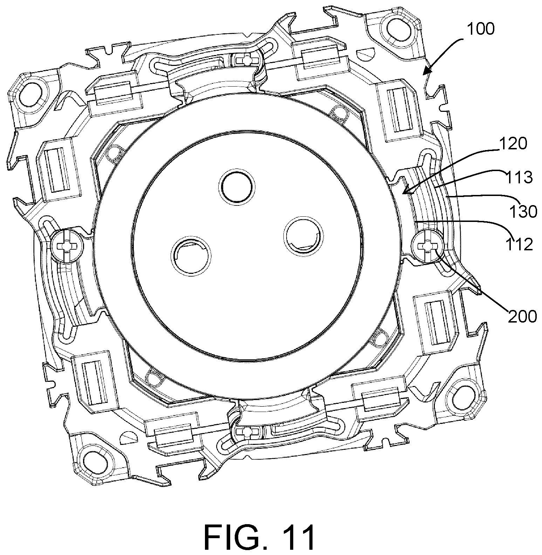

In Figure 11, a positioning adjustment can be seen, in which an incline misalignment has been compensated. As can be seen, the screws (200), after rotation, remain at one end of the groove (110), such that said misalignment is corrected, having a rotational adjustment capacity of up to ±10 degrees.

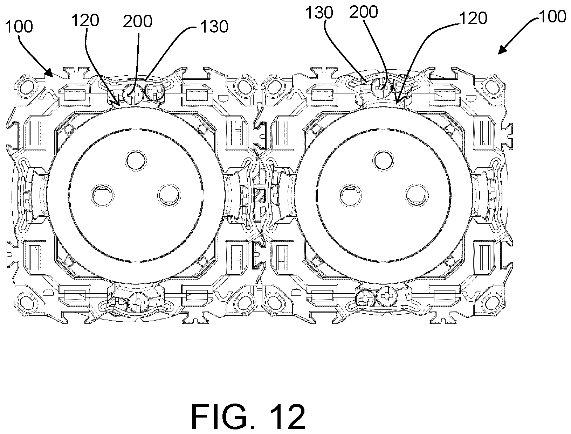

Another possible type of adjustment allowed by the frame (100) is the compensation for multiple boxes. As can be seen in Figure 12, in the left frame (100), the upper elastic fastening element (120) is compressed compensating for a vertical misalignment, and in the left frame (100), the lower elastic fastening element (120) is also compressed, such that a misalignment of the inclination of the multiple boxes can be compensated. As mentioned above, in one embodiment the entire frame (100) is a single piece that monolithically includes both the elastic recovery means of the fastening edge (112) and those of the outer edge (113). This piece is preferably made of plastic.

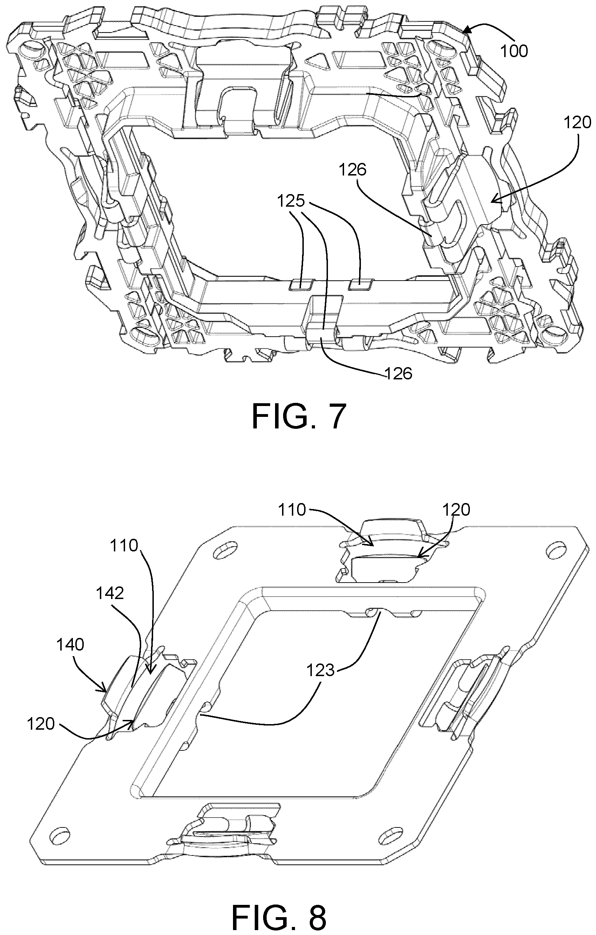

In another preferred embodiment, the elastic wedge (120) is a separate piece that is able to be firmly fastened to the body of the frame (100); moreover, this separate piece (120) is preferably made of metal. Figure 6 shows an embodiment of the same, and Figure 7 shows the piece (120) fastened to the frame (100) (in this case, four pieces, one on each side of the frame (100), as exemplified in the other embodiments and as is usual in this type of mechanism). The fact that it is made of metal is intended to make it more durable under the stresses to which it will be subjected during the assembly/disassembly of the frame (100).

In one embodiment, the independent elastic fastening element (120) comprises fastening means for fastening to the frame (100) in the form of claws (125); the arrangement and number of claws (125) could be different from that shown in Figure 6 provided that a firm fastening is achieved, although this configuration has been shown to perform well without adding too much complexity to the design of the piece. The frame (100) is provided with recesses or housings to house said claws (125) and facilitate their assembly.

In another embodiment, the entire frame (100) is monolithic, but is made of metal. This option can be seen in figure 8. In this case, since it would not be feasible to provide elasticity to the outer edge (113) of the groove (110) by means of an elongate strip (130), the configuration illustrated in said Figure 8 is chosen, wherein the outer edge (113) comprises a skirt (140) which extends away from the assembly box (300) and which in turn comprises a convexity (142). The curvature of this skirt (140) allows the width of the slot (110) to remain constant in any rotational position of the frame (100) relative to the box. It further comprises bevels at the top and bottom to prevent engagement with the screw (200) during both assembly and disassembly, with said outer edge (113) creating only lateral thrust to the screw (200). In addition, as the elastic fastening element (120) is also made of metal, it has a recess (123) in its central portion, which may include the area of the elastic pivoting articulation (126) or part thereof, to facilitate pivoting between the sheets (122, 124).

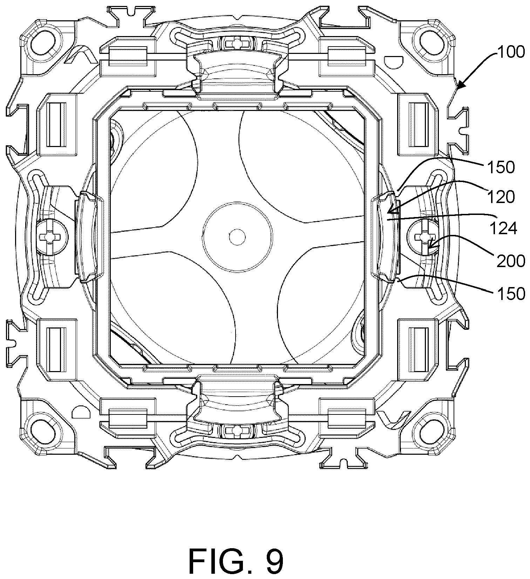

The frame (100) may also comprise an optional feature to keep the outer sheet (124) compressed against the inner sheet (122), without the possibility of elastic recovery, and thus make it easier to remove or disassemble the frame (100). This feature is shown in Figure 9 in the form of projections (150) that project into the elastic compression/recovery path of the outer sheet (124); these projections (150) are shaped in such a way that they allow the outer sheet (124) to "jump" over them in its compression path against the inner sheet (122), with slight force exerted by fingers, but then do not allow the outer sheet (124) to return to its rest position, remaining in the position shown on the left and right sides of the frame (100) in Figure 9. In this way, the slot (110) is opened to allow the passage of the head of the screw (200) and the subsequent removal of the frame (100). The shape of the projections (150) shown in Figure 9 is illustrative, although preferred, and any other shape that serves the function described could be provided. It is also envisaged that, in order to provide leverage in the clipping process, elements could be added to help the tip of the screwdriver to be housed in an area from which the rotation itself of the screwdriver from the tip helps to push the elastic fastening element (120) to be clipped.

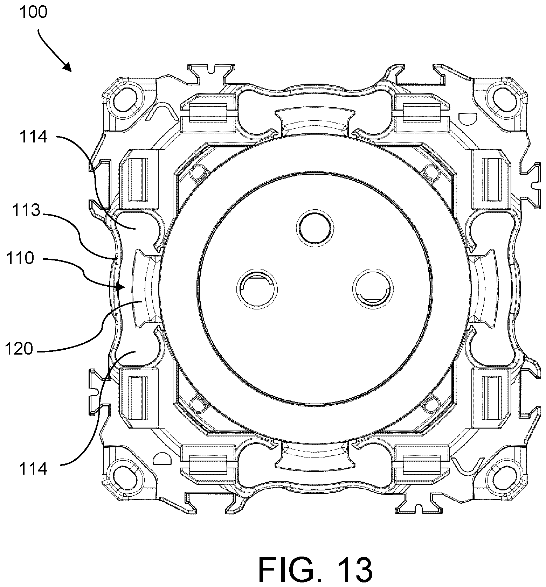

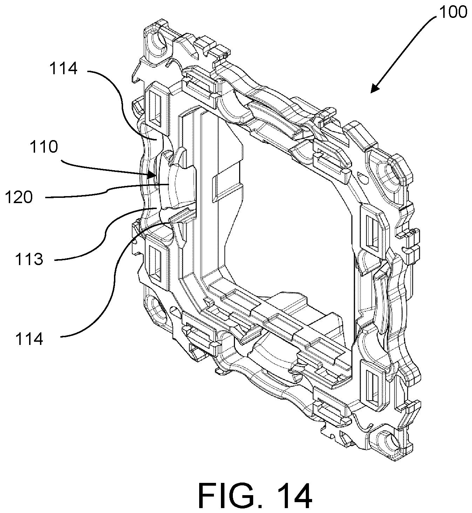

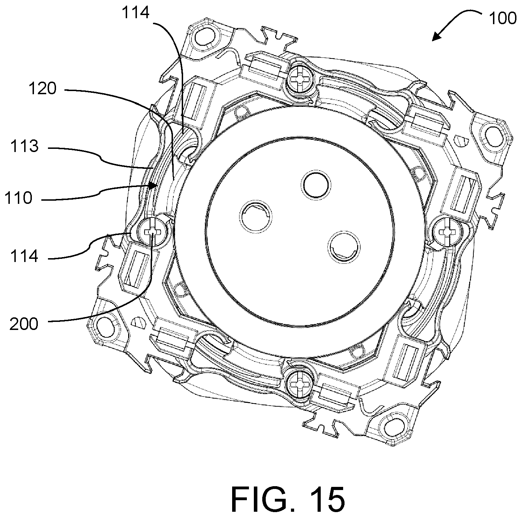

As an alternative to the disassembly by compression of the outer sheet (124) against the inner sheet (122) of the flexible area (120), in another exemplary embodiment, the slot (110) comprises at least one of its two ends, preferably at two ends, a widening (114), preferably circular, as can be seen in figures 13 to 15, which allows an alternative system of disassembly by rotating the frame (100).

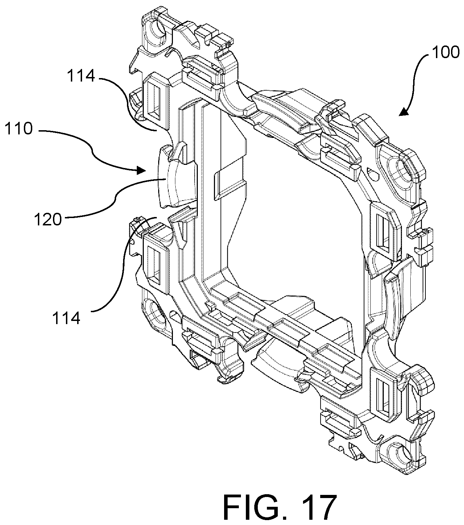

Specifically, Figure 17 shows a positioning adjustment for the disassembly of the frame (100). As can be seen, after rotation the screws (200) remain at one end of the slot (110) comprising the widening (114), such that access to the screw (200) is facilitated without the need to compress the outer sheet (124) against the inner sheet (122) of the flexible area (120).

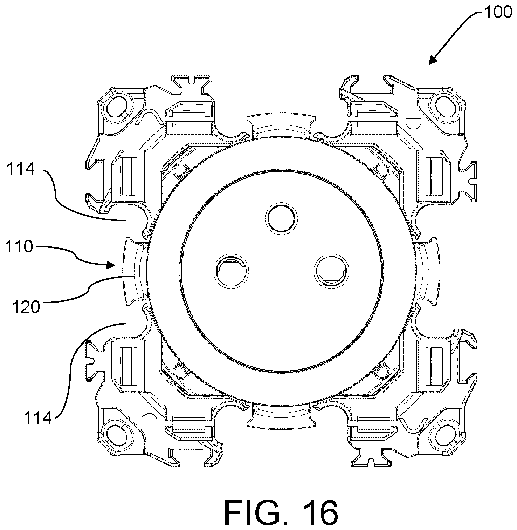

In another exemplary embodiment, the slots (110) do not comprise respective outer edges (113), as can be seen in Figures 16 and 17.

Also, as in the previous embodiment, the respective slots (110) may comprise at their respective ends a widening (114) to allow an alternative disassembly system by rotating the frame (100). It is not excluded that in the present embodiment, wherein the grooves (110) do not comprise outer edges (113), the grooves (110) do not comprise such widenings (114) either.

## Claims

1. A fastening frame (100) for fastening electrical mechanisms to a corresponding box (300) by means of fastening screws (200), **characterised in that** it comprises, on at least two opposite sides, an elastic fastening element (120) with a V-shaped cross-section, comprising two sheets, one inner (122) and one outer (124), joined by means of an elastic pivoting articulation (126), such that one inner end of the "V" is integral with a central portion of the frame (100), and the other end of the "V" is free and creates a fastening edge (112), such that when the frame (100) is assembled in the box (300), when the frame (100) presses against the head of the fastening screws (200) partially fastened in the box (300), the outer sheet (124) of the elastic fastening element (120) flexes until it overcomes the fastening edge (112), said fastening edge (112) resting on the threaded body of the fastening screw (200) by the action of the elastic pivoting articulation (126), enabling the frame (100) to be fastened by fastening the fastening screws (200) to the fastening edge (112).

2. The fastening frame (100) according to claim 1, wherein the outer sheet (124) of the elastic fastening element (120) has a terminal portion (128) at an angle with respect to the main plane of the frame (100) that is smaller than the rest of the outer sheet (124).

3. The fastening frame (100) according to the preceding claim, wherein the terminal portion (128) of the elastic fastening element (120) comprises an upper face at an angle with respect to the main plane of the frame (100).

4. The fastening frame (100) according to any of the preceding claims, comprising an outer edge (113) which together with the fastening edge (112) defines a through slot (110) for the passage of the fastening screw (200), the outer edge (113) being in the shape of an elongate elastically deformable strip.

5. The fastening frame (100) according to the preceding claim, wherein the elastic fastening element (120) and the outer edge (113) form a single piece of plastic with the rest of the frame (100).

6. The fastening frame (100) according to any of claims 1 to 4, wherein the elastic fastening element (120) is a separate metal piece that can be fastened to the frame (100).

7. The fastening frame (100) according to any of claims 1 to 3, which is a single metal piece, comprising a rigid outer edge (113) which together with the fastening edge (112) defines a through slot (110) for the passage of the fastening screw (200), the outer edge (113) being in the form of an elongate strip with a longitudinal skirt (140) comprising a convexity (142) curved towards the elastic fastening element (120).

8. The fastening frame (100) according to any of the preceding claims, comprising at least one locking projection (150) on at least one side wall adjacent to the elastic fastening element (120), which locks said elastic fastening element (120) in its compression position to prevent it from returning to the operative fastening position by the action of the elastic pivoting articulation (126).
